# EUROPEAN PATENT APPLICATION

(11) **EP 4 303 102 A1**
(43) Date of publication of application: **10.01.2024**
(21) Application number: 22183606.7
(22) Date of filing: 07.07.2022
(51) Int. Cl.: B62D 33/02, B62D 53/02

(54) **NON-CABIN ARTICULATED TRUCK**

(71) Applicant: Sandvik Mining and Construction Oy, 33330 Tampere (FI)
(72) Inventor: KITULA, Mikko, 33311 Tampere (FI)
(74) Representative: Sandvik

(57) **Abstract**

A non-cabin articulated truck (100) comprising:
- a first vehicle module (101) comprising a first frame (2) and at least one first wheeled axle (21),
- a second vehicle module (102) comprising a second frame (3) and at least one second wheeled axle (22), wherein the first vehicle module (101) being interconnected in an articulated manner about a vertical pin and/or a vertical axis V to the second vehicle module (102). Each of the first vehicle module (101) and the second vehicle module (102) is provided with a load carrying arrangement (7, 8).

## Description

### FIELD OF THE INVENTION

The invention relates to a field of non-cabin articulated vehicles. The invention relates field of autonomous articulated trucks. The invention relates to field of mining machines.

### BACKGROUND OF THE INVENTION

Mining machines employed in the removal of excavated rock material include loading and transport, equipment. It is previously known to provide an articulated truck such as a dumper having a front vehicle module pivotally connected about a vertical pin to a rear vehicle module, usually comprising a load carrying arrangement, such as a bed, a dump box, a load bearing bin etc.

This articulated truck arrangement allows such trucks to have smaller turning radii then those that have a steered axle, for the same length vehicle. As such articulated trucks are particularly useful in situations such as in underground mines and are the preferred vehicle for hauling ore in underground mines where the tunnels may be quite tight.

Typical underground articulated trucks have a front vehicle module housing, comprising a cabin, an engine that drives wheels both in the front module and the rear vehicle module, the rear vehicle module comprising a load carrying arrangement. Yet to provide power to both the front vehicle module and the rear vehicle module with the load carrying arrangement requires complex drivelines.

In mines and underground excavation, a high load bearing capacity is generally required of the transport equipment in order to be able to remove the rock material as efficiently as possible. On the other hand, the transport equipment should be designed such that it can conveniently move and turn in the relatively narrow and/or low-height underground mining tunnels.

A disadvantage of the current prior art transport equipment solutions is that their load bearing capacity may not be sufficient in relation to the space required for driving in narrow and/or low-height underground mining tunnels. At the same time, the turning angle of the articulated truck may be very limited.

### SUMMARY

The disclosure provides a non-cabin articulated truck.

According to first aspect, the present invention provides a non-cabin articulated truck. According to the invention the non-cabin articulated truck comprising:
- a first vehicle module comprising a first frame and at least one first wheeled axle,
- a second vehicle module comprising a second frame and at least one second wheeled axle, wherein the first vehicle module being interconnected in an articulated manner about a vertical pin and/or a vertical axis to the second vehicle module, and
   wherein each of the first vehicle module and the second vehicle module is provided with a load carrying arrangement.

The technical effect is that with the non-cabin design of the non-cabin articulated truck each of the first vehicle module and the second vehicle module may be provided with a load carrying arrangement, where the load carrying capacity of the non-cabin articulated truck is high, since the cabinless structure enables use spared space of a cab for the load. An articulation between the first vehicle module and the second vehicle module enables good steerability and makes the vehicle agile. Moreover, in an embodiment of the non-cabin articulated truck comprising only one wheeled axle in each of the vehicle modules may save space and keep a structure of the non-cabin articulated truck simple. A further advantage may be that the design of the non-cabin articulated truck may be kept rather low. In an embodiment it may be possible to get an optimal weight distribution for the non-cabin articulated truck.

The non-cabin articulated truck is characterized by what is stated in the independent claim.

Some other embodiments are characterized by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit subtasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In an embodiment of the non-cabin articulated truck the first vehicle module and the second vehicle module may be interconnected to rotate about a longitudinal axis L in relation to each other. In an embodiment this tilting movement may be called an oscillation. In an embodiment a central oscillation may allow the first frame of the first vehicle module and the second frame of the second vehicle module of the non-cabin articulated truck structure to move side to side relative to each other a specific amount. An advantage for the first vehicle module and the second vehicle module being interconnected to rotate about a longitudinal axis L in relation to each other is that it may help ensure that all tires, for example four tires, remain in contact with the ground on uneven terrain. It also may enable a vehicle design in which the wheeled axles may not need separate oscillation arrangements. This saves space and keeps the vehicle structures simple. In an embodiment no separate oscillation arrangement may be needed for wheeled axles due to central articulation and oscillation joint arrangement. This may save space and may enable to arrange for example a greater number of batteries than in prior art electric articulated trucks having oscillated wheeled axles and a cab for the operator. Also structures of the first vehicle module and the second vehicle module may be kept simple due to the central articulation and oscillating joint, and complex structures may be avoided. Non-complexity is also an advantage in manufacturing and assembly, and in maintenance of the vehicle.

In an embodiment of the non-cabin articulated truck the first wheeled axle of the first vehicle module and/or the second wheeled axle of the second vehicle module may comprise at least one hub motor and means for transmit a torque from the hub motor to at least one wheel. An advantage for using a hub motor as a drive motor is that it enables a simple structure for transmitting torque to the wheels. No complex car-dan axle arrangements are needed for transmitting torque from the drive motor to the wheels.

In an embodiment of the non-cabin articulated truck each of the first vehicle module and the second vehicle module may comprise an energy storing device for the drive motor, such as a battery. An advantage for this is that due the simple structure of the first vehicle module with first frame and at least one wheeled axle and the second vehicle module with the second frame and at least one wheeled axle, there is enough space for each of the vehicle modules for energy storing devices, such as for batteries. In an embodiment the non-cabin articulated truck may be an electric vehicle and a battery arrangements need space. An advantage is that the structure and the design of the non-cabin articulated truck enables space for placing the batteries distributed for example on a length and/or a width of the first vehicle module and/or the second vehicle module.

In an embodiment of the non-cabin articulated truck the non-cabin articulated truck may be an autonomous vehicle. An advantage for this is that no space is needed in the vehicle for the operator. This enables that all suitable space may be available for load carrying purposes. A further advantage may be that an autonomous non-cabin articulated truck may be ideal for load carrying purposes in underground mines. The structure may be made low and narrow enough for the vehicle to move without the operator in mining tunnels. The non-cabin articulated truck may be arranged to move in both of its main directions: a first vehicle module in front or the second vehicle module in front. A further advantage may be that there is no need to turn the vehicle around.

In an embodiment of the non-cabin articulated truck the non-cabin articulated truck may be a remotely controlled truck. Advantages may be basically similar as mentioned above, however a further advantage may be that the remote control enables the operator to take control the vehicle, for example in fault situations.

In an embodiment of the non-cabin articulated truck the load carrying arrangement may be a dump bed. An advantage for this is that the dump bed is suitable for especially mining solutions for hauling mining materials, such as rock material.

In an embodiment of the non-cabin articulated truck the load carrying arrangement may be a bed with an ejector-type unloading device. An advantage for using an ejector-type unloading device with the non-cabin articulated truck is that the bed or the dump box may be a fixed structure arranged to the frame. This may make structures of the first vehicle module and the second vehicle module robust. This also saves space. In an embodiment the dump box may be unloaded in low-height spaces because no tipping of the bed is needed for unloading the material from the bed.

In an embodiment of the non-cabin articulated truck a first load carrying arrangement extends in length and width of the first vehicle module and a second load carrying arrangement extend in length and width of the second vehicle module. An advantage for this is that the payload of the embodiment may be relatively high. In an embodiment the design of the truck may be kept low and no cab (a non-cabin design or a cabless design) for the operator is needed.

In an embodiment of the non-cabin articulated truck an actuator is arranged for turning the first vehicle module and/or the second vehicle module in relation to the vertical pin and/or the vertical axis. An advantage is that the steering of the non-cabin articulated truck may be kept simple and the vehicle is agile to turn ion narrow spaces, such as tunnels in mines.

In an embodiment of the non-cabin articulated truck the first vehicle module and/or the second vehicle module is provided with a sensor for sensing the environment of the truck. The structure of the non-cabin articulated truck enables plurality of suitable places for sensor. An advantage is that a sensor may be arranged to one or both of the vehicle modules. An advantage may be that the vehicle may be arranged in an embodiment to move forward-and-backward, for example in a mine tunnel, and sensors may be needed in both of the vehicle modules.

In an embodiment of the non-cabin articulated truck a sensor is arranged to a first end of the articulated non-cabin truck and/or to a second end of the articulated non-cabin truck. An advantage for this is that the vehicle can move in both directions (forward and/or reverse directions) and sensors may be arranged on both ends of the vehicle for effectively sensing the environment of the vehicle.

In an embodiment of the non-cabin articulated truck the sensor is arranged to a tail gate of the first load carrying arrangement and/or to a tail gate of the second load carrying arrangement. An advantage is that the tail gate offers a good installation point for the sensors for sensing the environment of the vehicle.

In an embodiment of the non-cabin articulated truck the sensor is at least one of the following: a radar, a lidar, a camera, an ultrasonic sensor, a thermographic camera, sonar, GPS, inertial measurement unit, or any combination of two or more of these. An advantage is several types of sensors may be arranged to the non-cabin articulated truck according to needs of different applications.

In an embodiment of the non-cabin articulated truck the non-cabin articulated truck further comprises:
- autonomous control means for autonomous control of the non-cabin articulated truck and its use,
- sensor for sensing the environment of the non-cabin articulated truck,
- control means for controlling the non-cabin articulated truck and its use on the basis of said sensed environment,
- position determining means for continuously determining the position of the truck,
- control means for controlling the truck and its use on the basis of said determined position.

In an embodiment of the non-cabin articulated truck may comprise any one of the embodiments mentioned above alone or together with any other embodiment.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a schematic side view of an embodiment of a non-cabin articulated vehicle,
**Figure 2** is a schematic top view of an embodiment of a non-cabin articulated vehicle,

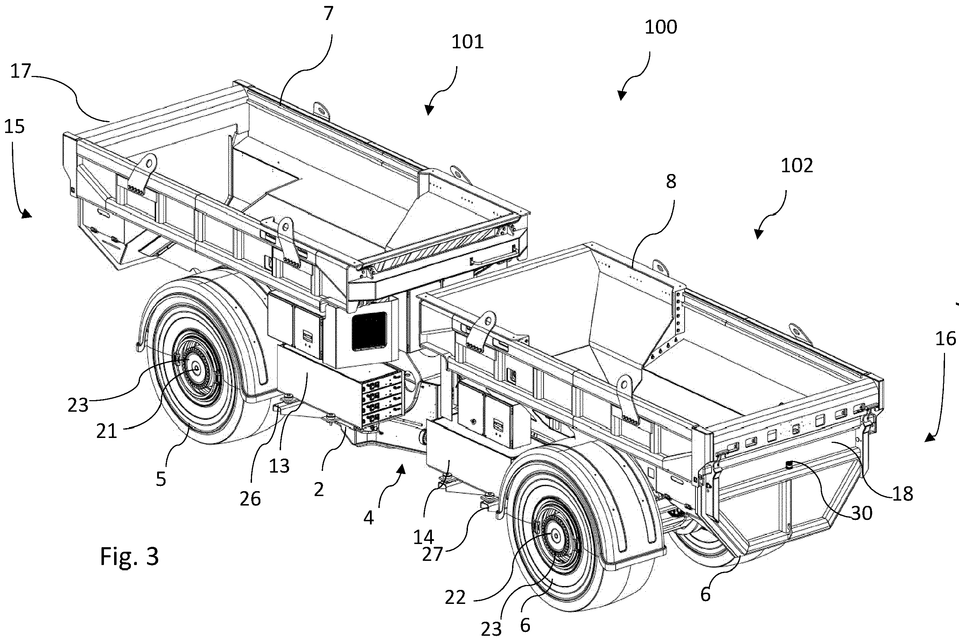

**Figure 3** is a schematic perspective view of an embodiment of a non-cabin articulated vehicle in a first position,

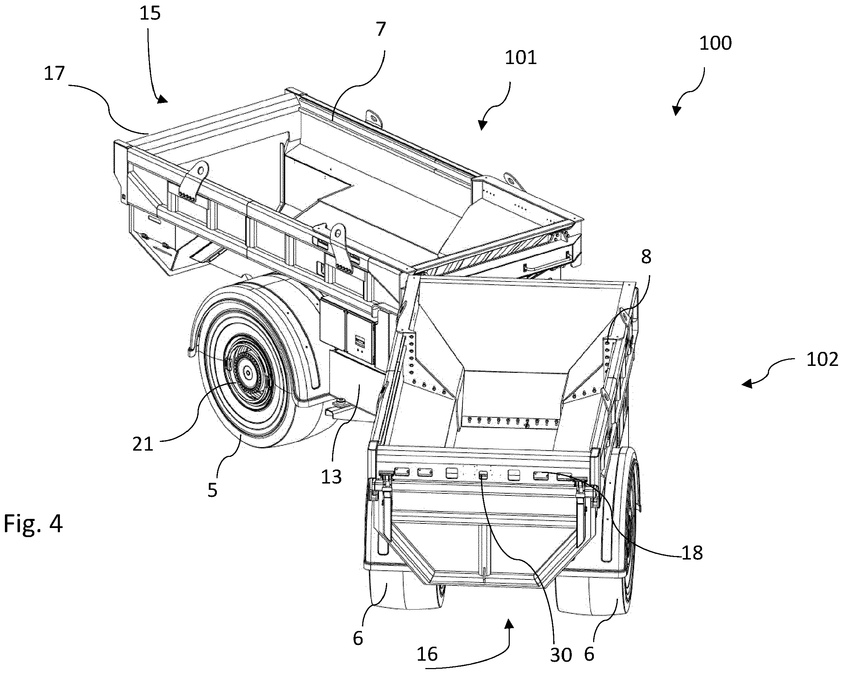

**Figure 4** is a schematic perspective view of an embodiment of a non-cabin articulated vehicle in a second position,
**Figure 5** is a schematic perspective view of an embodiment of a non-cabin articulated vehicle in a third position,
**Figure 6** is a schematic perspective view of an embodiment of a non-cabin articulated vehicle in a fourth position,
**Figure 7** is a schematic top view of an embodiment of a non-cabin articulated vehicle in a tunnel,
**Figure 8** is a schematic top view of an embodiment of a non-cabin articulated vehicle in a tunnel.

In the figures, some embodiments are shown simplified for the sake of clarity. Similar parts are marked with the same reference numbers in the figures.

### DETAILED DESCRIPTION

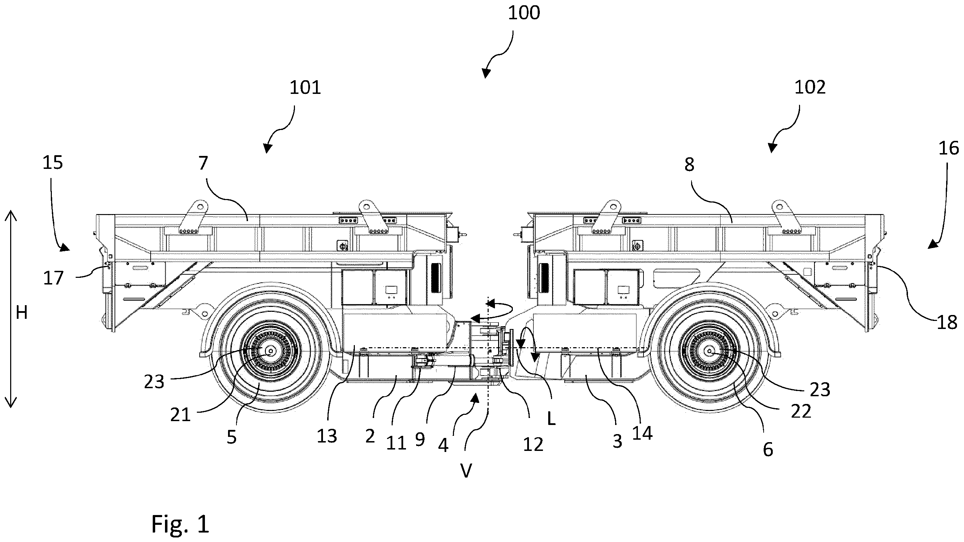

Figure 1 shows (in a side view) a non-cabin articulated transport vehicle, such as a non-cabin articulated truck 100. In an embodiment the non-cabin articulated transport vehicle may be a cabless articulated transport vehicle, in which an operator of the vehicle may not be onboard the non-cabin articulated transport vehicle. In an embodiment the non-cabin articulated transport vehicle may be suitable for transporting rock material and intended for use particularly in mines and excavations. In an embodiment the non-cabin articulated truck 100 may be a remote-controlled non-cabin articulated truck. In an embodiment the non-cabin articulated truck 100 may be an autonomously controlled non-cabin articulated truck. In an embodiment the non-cabin articulated truck may be an underground mining truck. In an embodiment the non-cabin articulated truck may be an underground mining vehicle. In an embodiment a non-cabin articulated truck 100 may comprise a first vehicle module 101 and a second vehicle module 102. The first vehicle module 101 may be interconnected in an articulated manner about a vertical pin and/or a vertical axis V to the second vehicle module 102. In an embodiment the first vehicle module 101 and the second vehicle module 102 may be provided with a load carrying arrangement 7, 8. In an embodiment the first vehicle module 101 may comprise a first chassis or frame 2. In an embodiment the first vehicle module 101 may comprise at least one first wheeled axle 21. The first wheeled axle 21 may be provided with wheels 5. In an embodiment the second vehicle module 102 may comprise a second chassis or frame 3. In an embodiment the second vehicle module 102 may comprise at least one second wheeled axle 22. The second wheeled axle 22 may be provided with wheels 6.

A drive equipment of the non-cabin articulated truck may comprise one or more drive motors and one or more power transmission means for transmitting drive power to one or more wheels 5,6. The drive power transmission may comprise a mechanical gear system and mechanical power transmission members or, alternatively, the drive power transmission may be hydraulic or electric. In an embodiment the drive motor may be at least one hub motor 23. In an embodiment a powertrain of the non-cabin articulated truck 100 may comprise a hub motor arrangement. In an embodiment the hub motor arrangement may comprise a plurality of hub motors 23. In an embodiment there may be a hub motor 23 for each of the wheels 5, 6 of the wheeled axles.

In an embodiment the non-cabin articulated truck may comprise wheels 5, 6. In an embodiment the wheels 5, 6 may be arranged supported on the frames 2, 3 of the first vehicle module 101 and the second vehicle module 102.

In an embodiment at least one first pair of wheels 5 may be arranged on the frame 2 of the first vehicle module 101 so that at least one wheel may be arranged on a first side of the frame and at least one second wheel may be arranged on the second side of the frame, and that the frame may be arranged between the first wheel and the second wheel.

In an embodiment at least one second pair of wheels 6 may be arranged on a second frame 3 of the second vehicle module 102 so that at least one wheel may be arranged on a first side of the frame and at least one second wheel may be arranged on the second side of the frame, and that the second frame 3 may be arranged between the first wheel and the second wheel.

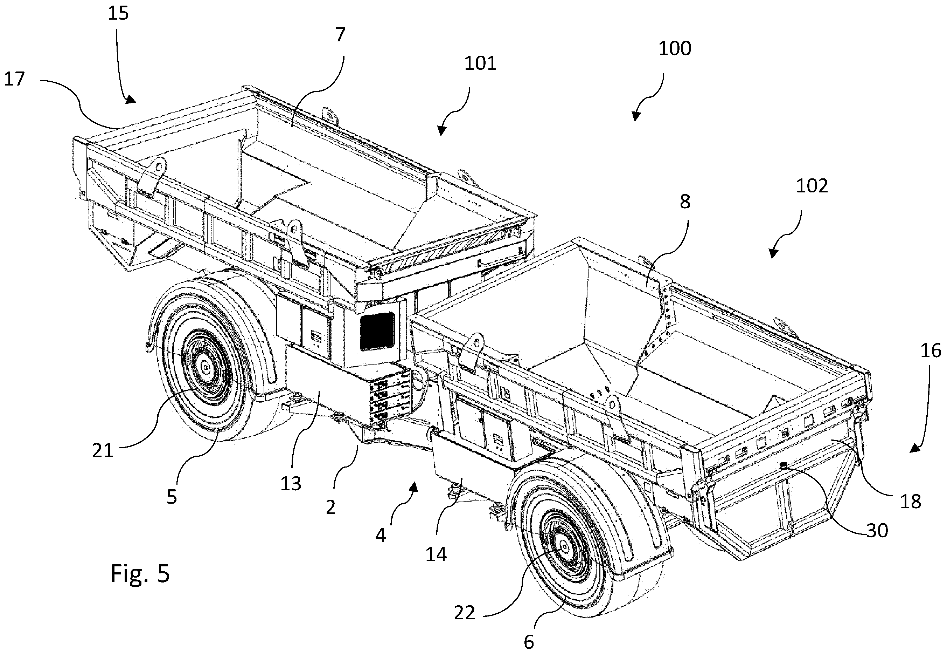

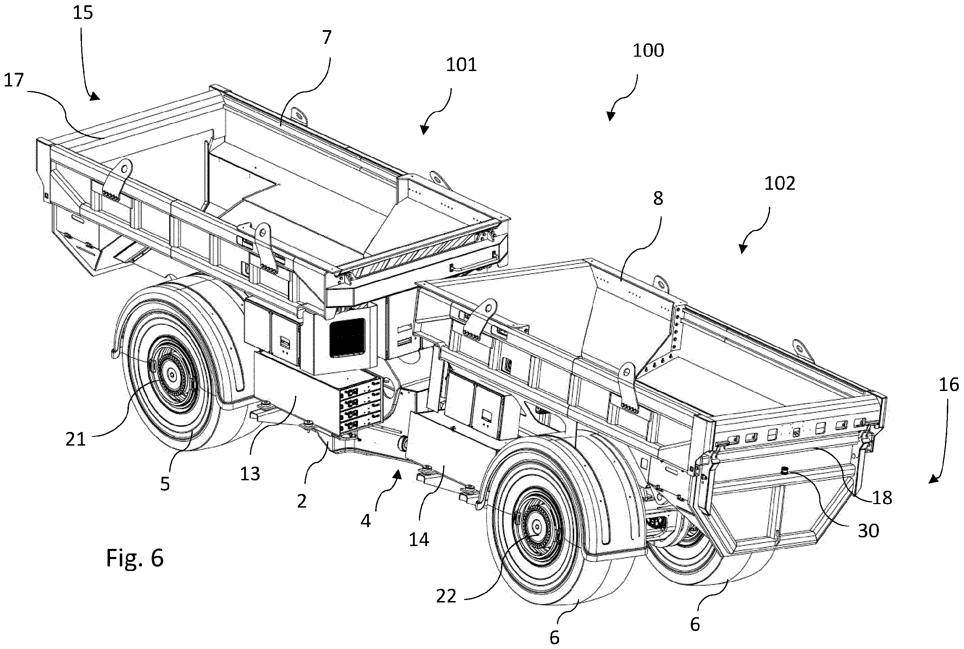

The first frame 2 of the first vehicle module 101 and the second frame 3 of the second vehicle module 102 may be arranged to tilt in relation to each other around a rotational axis L. In an embodiment the rotational axis L may be a longitudinal axis of the non-cabin articulated truck 100. In an embodiment the rotational axis L may be a main moving axis of the non-cabin articulated truck 100. In an embodiment the wheels of each pair of the wheels may be arranged on different sides of the rotational axis L. In an embodiment this tilting movement may be called an oscillation. A central oscillation may allow the first frame 2 of the first vehicle module 101 and the second frame 3 of the second vehicle module 102 of the non-cabin articulated truck structure to move side to side relative to each other a specific amount. In an embodiment the central oscillation may allow the first frame 2 and the second frame 3 of vehicle structure to move side to side relative to each other, for example about +/-8 deg. The relative movement may vary depending on the application. Typically, the relative movement between the first frame 2 of the first vehicle module 101 and the second frame 3 of the second vehicle module 102 may be side to side about +/- 5 to 15 deg. Figures 5 to 6 illustrate how the central oscillation may allow the first vehicle module 101 and the second vehicle module 102 to move relative to each other around the rotational axis L.

A central oscillation may be critical to improving stability of the non-cabin articulated vehicle. It helps ensure that all tires of the wheels 5, 6, for example tires of four wheels 5, 6, remain in contact with the ground on uneven terrain. In an embodiment a wheel 5, 6 may be mean also a wheel arrangement having a plurality of wheels, for example twinned wheels.

In an embodiment of the non-cabin articulated truck 100 of the Figure 1 may have four wheels 5, 6. The number of wheels may vary and instead of wheels, there may be different kind of mechanism for moving, for example a track arrangement. In an embodiment the first vehicle module 101 and/or the second vehicle module 102 may comprise several wheeled axles.

In an embodiment the non-cabin articulated truck may comprise a frame construction comprising a first frame 2 and a second frame 3 frame and an articulation 4 between the first frame 2 and the second frame 3.

In an embodiment a first vehicle module 101 and a second vehicle module 102 may be arranged to turn in relation to each other and in relation to a vertical axis V.

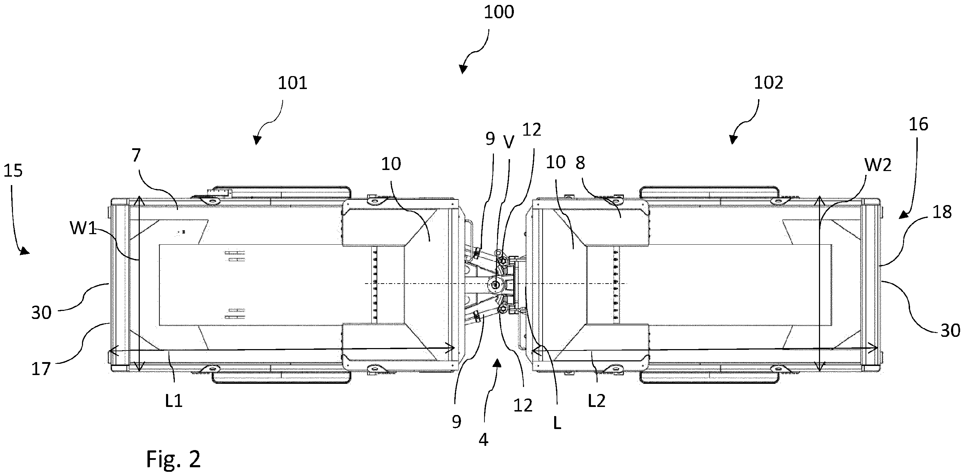

Figure 2 illustrates, in a top view, the fastening of the first vehicle module 101 and the second vehicle module 102 of the articulated transport equipment according to an embodiment by articulation 4. The figure also illustrates actuators 9, such as hydraulic cylinders, by which the first vehicle module 101 and the second vehicle 102 module can be pivoted with respect to each other.

In an embodiment the non-cabin articulated truck 100 may comprise:
- a first vehicle module 101 comprising a first frame 2 and at least one first wheeled axle 21,
- a second vehicle module 102 comprising a second frame 3 and at least one second wheeled axle 22. The first vehicle module 101 may be interconnected in an articulated manner about a vertical pin and/or a vertical axis V to the second vehicle module 102.

In an embodiment each of the first vehicle module 101 and the second vehicle module 102 may be provided with a load carrying arrangement 7, 8. In an embodiment the first vehicle module 101 and the second vehicle module 102 may be interconnected to rotate about a longitudinal axis L and in relation to each other.

In an embodiment the first wheeled axle 21 of the first vehicle module 101 and/or the second wheeled axle 22 of the second vehicle module 102 may comprise at least one hub motor 23 and means for transmit a torque from the hub motor 23 to at least one wheel 5, 6. In an embodiment a hub motor 23 may be arranged for each of the wheels. In an embodiment the first wheeled axle 21 and/or the second wheeled axle 22 may comprise two hub motors 23.

In an embodiment of the non-cabin articulated truck each of the first vehicle module 101 and the second vehicle module 102 may comprise a power source for the at least one drive motor, such as the hub motor. In an embodiment the power source may be an energy storing device, such as a battery 13, 14.

In an embodiment of the non-cab articulated truck 100 may be powered by at least one heavy-duty, high-powered battery pack which may be comprised of multiple battery modules. Each module may be comprised of multiple cells. In an embodiment the battery or battery pack may be removably attached to the vehicle 100. In an embodiment the battery 13, 14 or a part of the battery assembly may be fixedly attached to the vehicle. In an embodiment the battery 13 may be attached on a support 26 connected to the first frame 2 of the first vehicle module 101. In an embodiment the battery 14 may be attached on a support 27 connected to the second frame 3 of the second vehicle module 102. In an embodiment the powertrain may comprise cabling from the energy storage to the electric hub motors and other devices needed in the electric powertrain.

In an embodiment the non-cabin articulated truck may be connectable to a power line for example for charging the energy storing device. In an embodiment the non-cabin articulated truck may be connectable to the power line by a connector. In an embodiment the connector may be arranged to a trolley pole arrangement arranged on the truck. The truck may be arranged to receive current from trolley lines arranged at a set distance from each other and a distance from the truck. In an embodiment of the non-cabin articulated truck a range extender may be arranged for charging the energy storing devices, such as batteries. In an embodiment the range extender may be a fuel-based auxiliary power unit that may extend the range of the electric vehicle by driving an electric generator that charges the vehicle's battery.

In an embodiment the non-cabin articulated truck 100 may be an autonomous vehicle. In an embodiment the non-cabin articulated truck may be a ground vehicle that is capable of sensing its environment and moving safely with little or no human input. In an embodiment the non-cabin articulated truck may be a self-driving vehicle that can combine a variety of sensors 30 to perceive their surroundings, such as thermographic cameras, radar, lidar, sonar, GPS, odometry and inertial measurement units. A control system may be arranged to interpret sensory information to identify appropriate navigation paths, as well as obstacles and/or relevant signage.

In an embodiment the non-cabin articulated truck 100 may be a remotely controlled truck. In an embodiment the non-cabin articulated truck 100 may be an unmanned ground vehicle (UGV). The unmanned ground vehicle may operate while in contact with the ground without an onboard human presence. In an embodiment the non-cabin articulated truck 100 may have a set of sensors 30 to observe the environment, and may either autonomously make decisions about its behaviour or pass the information to a human operator at a different location who will control the vehicle through teleoperation.

In an embodiment of the non-cabin articulated truck the load carrying arrangement 7, 8 may be a dump bed. In an embodiment of the non-cabin articulated truck the load carrying arrangement 7, 8 may be a bed with an ejector-type unloading device. The ejector type unloading device may comprise an ejector 10 arranged movably in the dump box for unloading the material from the dump box. The ejector-type unloading device may further comprise a drive device for moving the ejector in the dump box from a first position to the second position. In an embodiment the ejector 10 of each dump box 7, 8 may be arranged to move from a first position, in which the ejector 10 is in the dump box next to the central articulation 4, towards the second position i.e. towards the end 15, 16 of the non-cab articulated truck. The advantage for using an ejector-type unloading device with the non-cabin articulated truck is that the bed or the dump box may be a fixed structure arranged to the frame. This may make structures of the first vehicle module and the second vehicle module robust. This also saves space. In an embodiment the dump box may be unloaded in low-height spaces, because no tipping of the bed is needed for unloading the material from the bed.

In an embodiment the first load carrying arrangement 7 may extend in length direction and in width direction of the first vehicle module 101. In an embodiment of figures 1 to 2 a length L1 of the first load carrying arrangement 7 may substantially extend to a length of the first frame 2 of the first vehicle module 101. A width W1 of the first load carrying arrangement 7 may substantially extend to a width of the first vehicle module 101. In an embodiment also the second load carrying 8 arrangement may extend in a length direction and a width direction of the second vehicle module 102. In an embodiment of figures 1 to 2 a length L2 of the second load carrying arrangement 8 may substantially extend to a length of the second frame 3 of the second vehicle module 102. A width W2 of the second load carrying arrangement 8 may substantially extend to a width of the second vehicle module 102. As shown in an embodiment of figure 2 the first load carrying arrangement 7 may have "a footprint" i.e. an area (width W1 X length L1) covering the first vehicle module 101 and the second load carrying arrangement 8 may have "a footprint" i.e. an area (width W2 X length L2) covering the second vehicle module 102. The payload of the embodiment is relatively high since the design of the truck may be kept low and no cab (a non-cabin design or a cabless design) for the operator is needed. A height H of an empty non-cabin articulated truck 100 is illustrated in figure 1. The height H may be measured from the ground vertically up to approximately the highest point of the vehicle. In an embodiment this makes possible to utilize space for the load carrying arrangement and for the payload. In an embodiment powertrain, can be easily arranged to be supported to the frame 2 of the first vehicle module 101 and/or to the frame 3 of the second vehicle module 102. The batteries 13, 14 may be arranged distributed on a length and/or width of the first vehicle module 101 and/or the second vehicle module 102. This may enable to make the design of the non-cabin articulated truck rather low. In an embodiment it may be possible to get an optimal weight distribution for the non-cabin articulated truck. In an embodiment no separate oscillation arrangement is needed for wheeled axles due to central articulation and oscillation joint arrangement. This may save space and may enable to arrange a greater number of batteries than in prior art articulated trucks having oscillated wheeled axles and a cab for the operator. Also structures of the first vehicle module and the second vehicle module may kept simple due to the central articulation and oscillating joint 4. The non-cabin articulated truck may have a high hauling capacity. In an embodiment the non-cabin articulated truck 100 may have about 50 to 75 ton hauling capacity. In an embodiment the mass (or an unloaded weight) of the non-cabin articulated truck 100 may be about 50 tonnes. Prior art articulated truck may have a hauling capacity of max. 50 ton and the mass (or an unloaded weight) of the prior art articulated truck being 50 ton. In an embodiment the hauling capacity of the non-cabin articulated truck 100 may be significantly higher than the prior art truck. In an embodiment the hauling capacity may be about 50% higher than the prior art articulated truck.

In an embodiment an actuator 9 may be arranged for turning the first vehicle module 101 and/or the second vehicle module 102 in relation to the vertical pin and/or the vertical axis V. In an embodiment a first end of the actuator 9 may be arranged on the first vehicle module 101 and the second end of the actuator may be arranged on the second vehicle module 102. In an embodiment the first vehicle module 101 may have a first connection point 11 for the first end of the actuator 9. In an embodiment the second vehicle module 102 or the articulation and central oscillation joint 4 may have a second connection point 12 for the second end of the actuator 9. In an embodiment the actuator 9 may be an electrically operated actuator or a hydraulically operated actuator or a pneumatically operated actuator. In an embodiment the actuator may be a cylinder-piston combination. In an embodiment the first end of the actuator may be an end of the cylinder and the second end of the actuator may be an end of the piston rod. In an embodiment a plurality of actuators 9 may be arranged. In an embodiment actuators may be arranged in pairs, wherein a first actuator may be arranged on a first side of the longitudinal axis and the second actuator is arranged to a second side of the longitudinal axis. In an embodiment the actuator 9 may be arranged inclined position in relation to an axis parallel to a longitudinal axis of the vehicle. In an embodiment the steering of the non-cabin articulated truck may be kept simple and the actuator may be designed and dimensioned according to the embodiment.

In an embodiment the first vehicle module 101 and/or the second vehicle module 102 may be provided with a sensor 30 for sensing the environment of the truck. In an embodiment a sensor 30 may be arranged to the first end 15 of the articulated non-cabin truck 100 and/or to the second end 16 of the articulated non-cabin truck 100.

In an embodiment the sensor 30 may be arranged to a tail gate 17 of the first load carrying arrangement 7 and/or to a tail gate 18 of the second load carrying arrangement 8. In an embodiment the first tail gate may be arranged in a first end of the non-cabin articulated truck. In an embodiment the second tail gate may be arranged in a second end of the non-cabin articulated truck.

In an embodiment the sensor 30 may be at least one of the following: a radar, a lidar, a camera, an ultrasonic sensor, a thermographic camera, sonar, GPS, inertial measurement unit, or any combination of two or more of these.

In an embodiment the non-cabin articulated truck may further comprise:
- autonomous control means for autonomous control of the non-cabin articulated truck and its use,
- sensor (30) for sensing the environment of the non-cabin articulated truck (100);
- control means for controlling the non-cabin articulated truck (100) and its use on the basis of said sensed environment;
- position determining means for continuously determining the position of the truck;
- control means for controlling the truck and its use on the basis of said determined position.

In an embodiment the non-cabin articulated truck may include:
- means for autonomous control of the non-cabin articulated truck and its use.

The non-cabin articulated truck may include:
- a steering configuration to control the direction of travel of the non-cabin articulated truck.

The non-cabin articulated truck may include:
- sensor means 30 for sensing the environment of the truck; and means for controlling the truck and its use on the basis of said sensed environment.

The truck may include:
- means for continuously determining the position of the truck; and
- means for controlling the truck and its use on the basis of said determined position.

The truck and its use can be controlled according to a sequence comprising loading utilizing said load carrier arrangement, moving the loaded truck and unloading the load.

The truck may further include:
- means for effecting tipping of said load carrier arrangement in at least one lateral direction.

In an embodiment of the articulated non-cabin truck, there may be provided a truck application computer program, wherein said computer program may comprise program code stored on a computer-readable medium for causing an electronic controller or another computer connected to the electronic controller to perform the above-mentioned steps for control the non-cabin articulated truck.

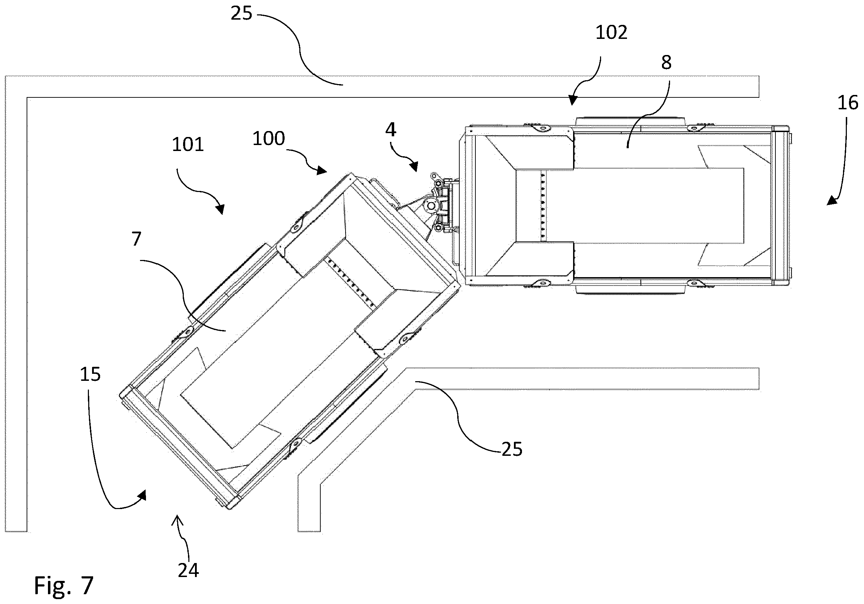

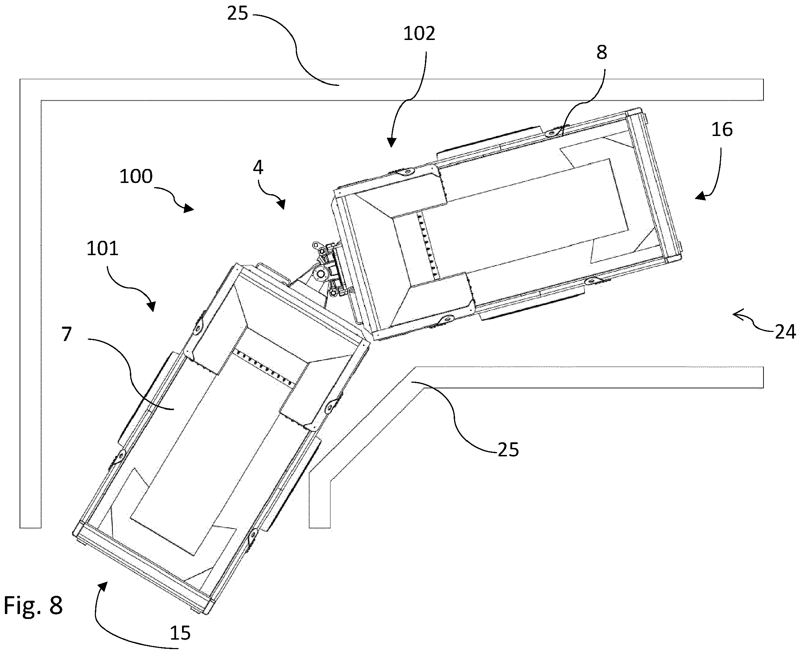

Figures 7 to 8 illustrate, as seen from above, the need of space for non-cab articulated truck 100 according to an embodiment of the invention, equipped with a platform, in a tunnel 24 between tunnel walls 25.

In an embodiment of the disclosure the non-cab articulated truck 100 equipped with first and second load carrying arrangements 7, 8 does not require so much space when turning; in other words, it is capable of turning e.g. in smaller/narrower tunnels 24. The need of space for the traditional transport equipment with cab and having corresponding payload may be significantly larger than the need of space of the embodiment of the non-cab articulated truck according to the disclosure.

By means of an embodiment of the non-cab articulated truck, an extremely good load bearing capacity is achieved with respect to the space required for turning in a mining tunnel. The non-cab articulated truck according to embodiment move agile in curves. The manoeuvrability and logical manageability of the non-cab articulated truck are very good. In the non-cab articulated truck according to an embodiment, the load can readily be distributed evenly between the axles. The non-cab articulated truck according to an embodiment also has very good stability.

It is obvious to a person skilled in the art that with the advancement of technology, the basic idea of the invention may be implemented in various ways. The invention and its embodiments are thus not limited to the examples described above, instead they may vary within the scope of the claims.

### Reference Symbols

100 Non-cabin, i.e. cabless, articulated truck
101 First vehicle module
102 Second vehicle module
2 First frame
3 Second frame
4 Central articulation and oscillation joint
5 Wheel of the first vehicle module
6 Wheel of the second vehicle module
7 First load carrying arrangement
8 Second load carrying arrangement
9 Actuator
10 Ejector
11 Connecting point of the first end of the actuator
12 Connecting point of the second end of the actuator
13 Power source/Battery
14 Power source/Battery
15 First end of the non-cabin articulated truck
16 Second end of the non-cabin articulated truck
17 Tail gate of the first load carrying arrangement
18 Tail gate of the second load carrying arrangement
21 First wheeled axle
22 Second wheeled axle
23 Hub motor
24 Tunnel
25 Tunnel wall
26 Support
27 Support
30 Sensor
H Height of the vehicle
L1 Length of a first load carrying arrangement
W1 Width of a first load carrying arrangement
L2 Length of a first load carrying arrangement
W2 Width of a first load carrying arrangement
L Longitudinal axis
V Vertical axis

## Claims

1. A non-cabin articulated truck (100) comprising:
- a first vehicle module (101) comprising a first frame (2) and at least one first wheeled axle (21),
- a second vehicle module (102) comprising a second frame (3) and at least one second wheeled axle (22),
wherein the first vehicle module (101) being interconnected in an articulated manner about a vertical pin and/or a vertical axis V to the second vehicle module (102), and
wherein each of the first vehicle module (101) and the second vehicle module (102) is provided with a load carrying arrangement (7, 8) .

2. The non-cabin articulated truck according to claim 1, wherein the first vehicle module (101) and the second vehicle module (102) being interconnected to rotate about a longitudinal axis (L) in relation to each other.

3. The non-cabin articulated truck according to claim 1 or claim 2, wherein the first wheeled axle (21) of the first vehicle module (101) and/or the second wheeled axle (22) of the second vehicle module (102) comprises at least one hub motor (23) and means for transmit a torque from the hub motor (23) to at least one wheel (5, 6).

4. The non-cabin articulated truck according to any one of claims 1 to 3, wherein each of the first vehicle module (101) and the second vehicle module (102) comprises an energy storing device for the drive motor, such as a battery (13, 14).

5. The non-cabin articulated truck according to any one of claims 1 to 4, wherein the non-cabin articulated truck is an autonomous vehicle.

6. The non-cabin articulated truck according to any one of claims 1 to 4, wherein the non-cabin articulated truck is a remotely controlled truck.

7. The non-cabin articulated truck according to any one of claims 1 to 6, wherein the load carrying arrangement (7, 8) is a dump bed.

8. The non-cabin articulated truck according to any one of claims 1 to 7, wherein the load carrying arrangement (7, 8) is a bed with an ejector-type unloading device (10).

9. The non-cabin articulated truck according to any one of claims 1 to 8, wherein a first load carrying arrangement (7) extends in length and width of the first vehicle module (101) and a second load carrying (8) arrangement extend in length and width of the second vehicle module (102).

10. The non-cabin articulated truck according to any one of claims 1 to 9, wherein an actuator (9) is arranged for turning the first vehicle module (101) and/or the second vehicle module (102) in relation to the vertical pin and/or the vertical axis (V).

11. The non-cabin articulated truck according to any one of claims 1 to 10, wherein the first vehicle module (101) and/or the second vehicle module (102) is provided with a sensor (30) for sensing the environment of the truck.

12. The non-cabin articulated truck according to any one of claims 1 to 11, wherein a sensor (30) is arranged to a first end (15) of the articulated non-cabin truck (100) and/or to a second end (16) of the articulated non-cabin truck.

13. The non-cabin articulated truck according to any one of claims 1 to 12, wherein the sensor (30) is arranged to a tail gate (17) of the first load carrying arrangement (7) and/or to a tail gate (18) of the second load carrying arrangement (8).

14. The non-cabin articulated truck according to any one of claims 1 to 13, wherein the sensor (30) is at least one of the following: a radar, a lidar, a camera, an ultrasonic sensor, or any combination of two or more of these.

15. The non-cabin articulated truck according to any one of claims 1 to 14, wherein the non-cabin articulated truck further comprises:
- autonomous control means for autonomous control of the non-cabin articulated truck and its use,
- sensor (30) for sensing the environment of the non-cabin articulated truck (100),
- control means for controlling the non-cabin articulated truck (100) and its use on the basis of said sensed environment,
- position determining means for continuously determining the position of the truck,
- control means for controlling the truck and its use on the basis of said determined position.
